# EUROPÄISCHE PATENTSCHRIFT

(11) **EP 3 649 852 B1**
(45) Veröffentlichungstag und Bekanntmachung des Hinweises auf die Patenterteilung: **13.10.2021**
(21) Anmeldenummer: 18205638.2
(22) Anmeldetag: 12.11.2018
(51) Int. Cl.: A01K 5/02, A01K 9/00, B08B 9/032, B08B 9/093, B08B 9/08, B08B 9/28

(54) **MILCHWAGEN MIT EINER REINIGUNGSFUNKTION**
MILK DISPENSING TROLLEY WITH A CLEANING FUNCTION
CHARRETTE À LAIT DOTÉE D'UNE FONCTION DE NETTOYAGE

(43) Veröffentlichungstag der Anmeldung: 13.05.2020
(73) Patentinhaber: Holm, Hans Joachim, 24784 Westerrönfeld (DE); Laue, Hans-Joachim, 24783 Osterrönfeld (DE)
(72) Erfinder: Holm, Hans Joachim, 24784 Westerrönfeld (DE); Laue, Hans-Joachim, 24783 Osterrönfeld (DE)
(74) Vertreter: Hauck Patentanwaltspartnerschaft mbB

(56) Entgegenhaltungen:
- EP-A1- 3 248 698
- DE-U1-202005 012 843
- DE-U1-202009 001 542
- DE-U1-202012 100 192

## Beschreibung

Die Erfindung betrifft einen Milchwagen mit einem Fahrgestell, einem Vorratsbehälter für ein flüssiges Nahrungsmittel und einer Fördereinrichtung, die einen mit einem Auslass des Vorratsbehälters verbundenen Eingang und einen Ausgang aufweist, der mit einer in dem Vorratsbehälter endenden Rückführleitung verbunden oder verbindbar ist.

Derartige Milchwagen werden in landwirtschaftlichen Betrieben bei der Nutztieraufzucht eingesetzt, insbesondere zur Verteilung eines flüssigen Nahrungsmittels an Kälber. Hierzu wird der Vorratsbehälter mit dem flüssigen Nahrungsmittel gefüllt und von Futterstelle zu Futterstelle gefahren. An jeder Futterstelle wird mit der Fördereinrichtung, deren Ausgang zu diesem Zweck mit einer Abgabeeinrichtung verbunden ist, eine Tränke befüllt, beispielsweise ein Trog, ein Nuckeleimer oder eine Nuckelflasche.

Ein solcher Milchwagen ist aus der Druckschrift DE 20 2005 012 843 U1 bekannt geworden. Der bekannte Milchwagen zeichnet sich durch eine spezielle Reinigungsfunktion aus, bei der die in dem Vorratsbehälter aufgenommene Flüssigkeit über die Fördereinrichtung und die Abgabeeinrichtung in das Innere des Vorratsbehälters zurückgeführt wird. Dadurch kann eine in dem Vorratsbehälter angeordnete Reinigungsflüssigkeit zum Spülen sämtlicher mit dem flüssigen Nahrungsmittel in Verbindung kommender Elemente des Milchwagens in einem offenen Kreislauf gefördert werden. Ebenfalls beschrieben ist die Anordnung eines Sprühkopfs im Inneren des Vorratsbehälters, mit dem der gesamte Innenraum des Vorratsbehälters einschließlich eines ihn verschließenden Deckels von der Reinigungswirkung erfasst werden kann.

Davon ausgehend ist es die Aufgabe der Erfindung, einen Milchwagen der eingangs genannten Art so zu verbessern, dass er die im Zusammenhang mit der Nutztieraufzucht anfallenden Arbeiten noch weiter vereinfacht.

Diese Aufgabe wird gelöst durch den Milchwagen mit den Merkmalen des Anspruchs 1 und durch die Verwendung eines Milchwagens gemäß Anspruch 14. Vorteilhafte Ausgestaltungen sind in den Unteransprüchen angegeben.

Die Erfindung beruht auf der Erkenntnis, dass im Zusammenhang mit der Fütterung der Nutztiere nicht nur der Milchwagen selbst regelmäßig gereinigt werden muss, sondern darüber hinaus auch die den einzelnen Tieren oder Gruppen von Tieren zugeordneten Behälter, in die die Nahrungsmittelrationen mit dem Milchwagen eingefüllt werden, also insbesondere Nuckeleimer und Nuckelflaschen. Herkömmlicherweise werden die Nuckeleimer oder Nuckelflaschen zu diesem Zweck eingesammelt und an einem geeigneten Ort gründlich gereinigt. Anschließend müssen die Nuckeleimer oder -flaschen wieder zu den Futterstellen zurücktransportiert werden. Diese Vorgehensweise ist sehr mühsam und zeitaufwendig. Zudem besteht die Gefahr, dass durch die wechselnde Zuordnung der Nuckeleimer oder -flaschen bei einer unvollständigen Reinigung Krankheiten von einem Tier auf ein anderes übertragen werden. Die Erfinder haben erkannt, dass beide Nachteile dadurch vermieden werden können, dass ein Milchwagen um eine zusätzliche Reinigungsfunktion erweitert und für die Reinigung der Nuckeleimer oder -flaschen verwendet wird.

Der Milchwagen hat ein Fahrgestell, einen Vorratsbehälter für ein flüssiges Nahrungsmittel und eine Fördereinrichtung, die einen mit einem Auslass des Vorratsbehälters verbundenen Eingang und einen Ausgang aufweist, der mit einer in dem Vorratsbehälter endenden Rückführleitung verbunden oder verbindbar ist, wobei die Rückführleitung einen innerhalb des Vorratsbehälters von unten nach oben führenden Endabschnitt aufweist, der in einem seitlichen Abstand von einer Behälterwandung angeordnet ist und an seinem oberen Ende mindestens eine Austrittsöffnung aufweist.

Das Fahrgestell weist mehrere Räder auf, sodass der Milchwagen einfach verfahren werden kann. Der Milchwagen kann mit einem Fahrantrieb, der mindestens eines der Räder des Fahrgestells antreibt, und/oder mit mindestens einem lenkbaren Rad ausgestattet sein.

Der Vorratsbehälter weist ein Fassungsvermögen zur Aufnahme einer größeren Menge des flüssigen Nahrungsmittels auf, beispielsweise im Bereich von 80 l bis 500 l. Er kann eine annähernd zylindrische, aufrechtstehende Grundform aufweisen. Der Vorratsbehälter kann einen Deckel aufweisen, mit dem eine obere Öffnung des Vorratsbehälters verschließbar ist, insbesondere einen an einer Seite schwenkbar gelagerter Deckel. Das flüssige Nahrungsmittel kann insbesondere Vollmilch oder Milchaustauscher sein, wobei der Milchwagen eine Rühreinrichtung oder einen Umwälzbetrieb zur Unterstützung eines Anmischvorgangs des Milchtauschers aufweisen kann. Weiterhin kann der Milchwagen eine Heizeinrichtung zum Temperieren und/oder Pasteurisieren des flüssigen Nahrungsmittels aufweisen.

Die Fördereinrichtung kann eine Pumpe aufweisen, insbesondere eine elektrisch angetriebene Pumpe. Der Fördereinrichtung kann außerdem eine Dosiersteuerung zugeordnet sein, sodass bei der Verteilung des flüssigen Nahrungsmittels automatisch vorgegebene Mengen ausdosiert werden können. Hierzu kann der Milchwagen eine Abgabeeinrichtung aufweisen, die mit einem Ausgang der Fördereinrichtung verbunden ist. Die Abgabeeinrichtung kann ein einfacher Schlauch sein, wahlweise verbunden mit zum Beispiel einem Dosierarm oder einer Zapfpistole. Der Vorratsbehälter weist einen Auslass auf, insbesondere in einem Behälterboden, der über eine Leitung mit dem Eingang der Fördereinrichtung verbunden ist.

Mit dem Ausgang der Fördereinrichtung ist eine Rückführleitung verbunden oder verbindbar, welche in dem Vorratsbehälter endet. Durch diese Rückführleitung kann die in dem Vorratsbehälter aufgenommene Flüssigkeit in einem offenen Kreislauf mithilfe der Fördereinrichtung umgewälzt werden. Dies kann wie bei dem aus der Druckschrift DE 20 2005 012 843 U1 bekannten Milchwagen für eine Durchmischung des flüssigen Nahrungsmittels oder in Verbindung mit einer Reinigungsflüssigkeit zur Reinigung des Milchwagens eingesetzt werden.

Bei der Erfindung weist die Rückführleitung einen innerhalb des Vorratsbehälters von unten nach oben führenden Endabschnitt auf, der in einem seitlichen Abstand von einer Behälterwandung angeordnet ist und an seinem oberen Ende mindestens eine Austrittsöffnung, aufweist. Der Endabschnitt kann geradlinig verlaufen und senkrecht angeordnet sein. Dies ist jedoch nicht zwingend, ein gekrümmter und/oder abgewinkelter Verlauf und/oder eine schräge Anordnung des Endabschnitts sind ebenfalls möglich. Durch den von unten nach oben führenden Endabschnitt kann mit der Fördereinrichtung eine Reinigungsflüssigkeit durch die Rückführleitung zu der Austrittsöffnung gefördert werden, wobei das obere Ende des Endabschnitts, an dem die mindestens eine Austrittsöffnung ausgebildet ist, weitgehend frei stehend innerhalb des Vorratsbehälters angeordnet ist. Dadurch ist es einfach möglich, einen Nuckeleimer oder eine Nuckelflasche mit seiner bzw. ihrer Öffnung über das obere Ende des Endabschnitts zu stülpen, sodass das Innere des Nuckeleimers bzw. der Nuckelflasche durch die aus der mindestens einen Austrittsöffnung austretende Reinigungsflüssigkeit gereinigt werden kann. Dadurch kann die Reinigung direkt an der jeweiligen Futterstelle durchgeführt werden und der Nuckeleimer bzw. die Nuckelflasche kann anschließend an derselben Futterstelle verbleiben. Eine Übertragung von Krankheiten von einem Tier zu einem anderen wird dadurch vermieden. Außerdem entfallen die unter Umständen langen Wege zwischen Futterstelle und Reinigungseinrichtung, die bei der heute üblichen Reinigungspraxis unvermeidlich sind.

Wegen des großen Fassungsvermögens des Vorratsbehälters kann eine relativ große Menge an Reinigungsflüssigkeit aufgenommen werden. Die durch etwaige, in einem zu reinigenden Nuckeleimer oder in einer zu reinigenden Nuckelflasche eingebrachten Restmengen oder sonstige Verschmutzungen sind im Vergleich zu der Reinigungsflüssigkeitsmenge gering, sodass auch eine größere Anzahl an Nuckeleimern oder -flaschen nacheinander gereinigt werden kann, ohne dass die Reinigungsflüssigkeit ausgetauscht werden muss.

Ein weiterer Vorteil des großen Fassungsvermögens ist, dass eine warme oder heiße Reinigungsflüssigkeit in der Regel nicht abkühlt, bevor die vorgesehene Anzahl an Nuckeleimern oder -flaschen gereinigt worden ist. Falls der Milchwagen eine Heizeinrichtung aufweist, kann mit dieser die Reinigungsflüssigkeit zusätzlich erwärmt werden.

Nachdem alle zu reinigenden Nuckeleimer oder -flaschen gereinigt worden sind, kann die Reinigungsflüssigkeit abgelassen werden. Nach einer anschließenden Reinigung des Milchwagens selbst kann dieser sofort für eine nachfolgende Verteilung von flüssigem Nahrungsmittel eingesetzt werden.

In einer Ausgestaltung ist die mindestens eine Austrittsöffnung in einer Höhe im Bereich von 0 cm bis 30 cm unterhalb eines oberen Rands des Vorratsbehälters angeordnet. Bei dieser Anordnung ist das obere Ende des Endabschnitts für eine Bedienperson besonders gut zugänglich. Zugleich wird vermieden, dass Reinigungsflüssigkeit aus der mindestens einen Austrittsöffnung aus dem Vorratsbehälter herausspritzt. Insgesamt ist ein besonders ergonomisches und sauberes Arbeiten möglich.

In einer Ausgestaltung beträgt der seitliche Abstand des Endabschnitts von der Behälterwandung zu allen Seiten mindestens 10 cm. Bevorzugt kann der seitliche Abstand von der Behälterwandung noch größer gewählt werden und beispielsweise mindestens 15 cm oder mindestens 20 cm betragen. In jedem Fall steht der Endabschnitts so frei, dass herkömmliche Nuckeleimer oder -flaschen einfach darüber gestülpt, gedreht und seitlich bewegt werden können, um eine vollständige Reinigung zu ermöglichen.

In einer Ausgestaltung ist der Endabschnitt in einem seitlichen Abstand von einer Mittelhochachse des Vorratsbehälters angeordnet. Dieser seitliche Abstand von der Mittelhochachse ist so gewählt, dass zwischen dem Endabschnitt und dem am weitesten entfernten Bereich der Behälterwandung ein hinreichend großer Freiraum besteht, um dort bequem einen Nuckeleimer oder eine Nuckelflasche vollständig in die Reinigungsflüssigkeit eintauchen zu können. Weist der Vorratsbehälter beispielsweise einen Innendurchmesser von 60 cm auf, kann der Endabschnitt zum Beispiel in einem Abstand von 10 cm von der Mittelhochachse des Vorratsbehälters angeordnet werden. Der minimale seitliche Abstand zur Behälterwandung beträgt dann etwa 20 cm, der maximale etwa 40 cm. Dies ermöglicht sowohl eine bequeme Handhabung eines auf den Endabschnitt gestülpten Nuckeleimers, als auch ein vollständiges Eintauchen des Nuckeleimers seitlich neben dem Endabschnitt.

In einer Ausgestaltung weist der Endabschnitt eine Länge von mindestens 15 cm auf. Die Länge des Endabschnitts kann bevorzugt noch größer gewählt werden und zum Beispiel mindestens 20 cm, mindestens 25 cm oder mindestens 30 cm betragen. Dadurch wird erreicht, dass ein Nuckeleimer oder eine Nuckelflasche so weit über den Endabschnitt gestülpt werden kann, dass das obere Ende des Endabschnitts nahe eines Bodens des Nuckeleimers bzw. der Nuckelflasche angeordnet ist. Dies begünstigt eine gute Reinigungswirkung, auch bei am Behälterboden angetrockneten Rückständen.

In einer Ausgestaltung weist die Rückführleitung einen innerhalb des Vorratsbehälters angeordneten, U-förmigen Abschnitt auf, wobei ein Schenkel des U-förmigen Abschnitts den Endabschnitt bildet und der andere Schenkel des U-förmigen Abschnitts nahe der Behälterwandung angeordnet ist. Eine Basis des U-förmigen Abschnitts, die die unteren Enden der beiden Schenkel miteinander verbindet, ist dann relativ tief in dem Vorratsbehälter angeordnet, insbesondere unterhalb eines Füllstands an Reinigungsflüssigkeit in dem Vorratsbehälter. Dadurch wird eine Verschmutzung der Basis des U-förmigen Abschnitts vermieden. Der nahe der Behälterwandung angeordnete Schenkel ist hinreichend weit von dem Endabschnitt entfernt, sodass er die Reinigungsarbeiten nicht behindert. Insbesondere kann er in einem Abstand von der Behälterwandung von 10 cm oder weniger oder 5 cm oder weniger angeordnet sein.

In einer Ausgestaltung ist ein außerhalb des Vorratsbehälters angeordneter Abschnitt der Rückführleitung von einer Abgabeeinrichtung gebildet, die mit dem Ausgang der Fördereinrichtung verbunden ist. Die Abgabeeinrichtung kann einen Schlauch und/oder einen Dosierarm und/oder eine Zapfpistole aufweisen. Bei der Verteilung eines flüssigen Nahrungsmittels können mit der Abgabeeinrichtung sehr einfach die einzelnen Tränkebehälter befüllt werden. Im Reinigungsbetrieb wird die Abgabeeinrichtung zu einem Teil der Rückführleitung. Hierzu kann ein freies Ende der Abgabeeinrichtung in eine Aufnahme eingesetzt werden, die insbesondere an einer Außenseite des Vorratsbehälters angeordnet ist. Auf diese Weise wird eine im Wesentlichen flüssigkeitsdichte Verbindung zwischen der Abgabeeinrichtung und den sich daran anschließenden Abschnitten der Rückführleitung hergestellt. Es kann zwischen Futtermittelabgabe und Reinigungsbetrieb gewechselt werden, ohne Ventile betätigen oder zusätzliche Leitungsabschnitte an die Fördereinrichtung anschließen zu müssen.

In einer Ausgestaltung weist die Rückführleitung einen mittleren Abschnitt auf, der durch die Behälterwandung hindurchgeführt oder um einen oberen Rand der Behälterwandung herumgeführt ist. Auf diese Weise kann die mit der Fördereinrichtung geförderte Flüssigkeit in den Vorratsbehälter und hin zu dem Endabschnitt zurückgeführt werden, ohne eine zusätzliche Öffnung im Behälterboden des Vorratsbehälters vorzusehen.

In einer Ausgestaltung ist der mittlere Abschnitt der Rückführleitung außerhalb des Vorratsbehälters mit der Abgabevorrichtung verbindbar. Hierzu kann der mittlere Abschnitt der Rückführleitung eine geeignete Aufnahme aufweisen, in die ein freies Ende der Abgabevorrichtung eingesetzt wird, wie vorstehend bereits erläutert.

In einer Ausgestaltung ist ein innerhalb des Vorratsbehälters angeordneter Abschnitt der Rückführleitung lösbar mit dem mittleren Abschnitt der Rückführleitung verbindbar und/oder lösbar an dem mittleren Abschnitt der Rückführleitung befestigbar. Der innerhalb des Vorratsbehälters angeordnete Abschnitt der Rückführleitung kann insbesondere der vorstehend beschriebene, U-förmige Abschnitt sein. Zur Verbindung und/oder Befestigung an dem mittleren Abschnitt der Rückführleitung kann beispielsweise eine Gewindeverbindung an dem mittleren Abschnitt ausgebildet sein. Bevorzugt befindet sich dort eine Kupplung, über die die Verbindung einfach und werkzeuglos hergestellt und gelöst werden kann, insbesondere mit einer Schnellkupplung und/oder einem Schnellverschluss, wobei zum Beispiel eine Überwurfmutter, eine Klemme oder ein Bajonettverschluss zum Einsatz kommen kann. In jedem Fall kann der innerhalb des Vorratsbehälters angeordnete Abschnitt der Rückführleitung einfach eingesetzt und entnommen werden, beispielsweise um zwischen Abgabe- und Reinigungsbetrieb zu wechseln oder um einen herkömmlichen Milchwagen mit der Reinigungsfunktion nachzurüsten.

In einer Ausgestaltung ist am Auslass des Vorratsbehälters und/oder in einer Verbindungsleitung zwischen dem Auslass und dem Eingang der Fördereinrichtung ein Filter angeordnet. Der Filter kann ein Grobfilter oder ein Schmutzfilter sein und beispielsweise ein Sieb oder ein Gitter aufweisen. Durch den Filter wird verhindert, dass gröbere Verunreinigungen aus einem gereinigten Nuckelbehälter in die Fördereinrichtung gelangen und diese beschädigen oder die mindestens eine Austrittsöffnung verstopfen können.

In einer Ausgestaltung weist der Milchwagen eine Steuerung auf, mit der die Fördereinrichtung in einem Reinigungsbetrieb für einen vorgegebenen Zeitraum aktivierbar ist. Der vorgegebene Zeitraum kann beispielsweise im Bereich von 5 Sekunden bis 90 Sekunden liegen, bevorzugt bei etwa 15 bis 20 Sekunden. Mithilfe der Steuerung kann der vorgegebene Zeitraum auf einen gewünschten Wert eingestellt werden. Die Aktivierung der Fördereinrichtung für den vorgegebenen Zeitraum erfolgt bevorzugt mit einem einfach erreichbaren Betätigungselement, insbesondere einem Taster an einem Griff oder einer anderen gut zugänglichen Stelle außen am Milchwagen. Der Zeitraum kann so gewählt werden, dass eine gründliche Reinigung der zu reinigenden Behälterart sichergestellt ist.

In einer Ausgestaltung ist am oberen Ende des Endabschnitts ein Sprühkopf angeordnet, der die mindestens eine Austrittsöffnung aufweist, wobei der Sprühkopf dazu ausgebildet ist, bei Förderung einer Flüssigkeit mit der Fördereinrichtung mehrere seitlich und/oder nach oben gerichtete Flüssigkeitsstrahlen zu erzeugen. Hierzu können die Austrittsöffnungen auf die Förderleistung der Fördereinrichtung abgestimmt sein. Eine einfache und vollständige Reinigung wird begünstigt. Bevorzugt kann der Sprühkopf einen Außendurchmesser von 5 cm oder weniger, beispielsweise von 4 cm oder weniger, aufweisen. In diesem Fall können auch Nuckelbehälter mit relativ kleiner Öffnung, insbesondere Nuckelflaschen mit einem Schraub- oder Klemmverschluss, mit dem der Nuckel befestigt ist, optimal gereinigt werden.

Die oben genannte Aufgabe wird ebenfalls gelöst durch die Verwendung eines Milchwagens gemäß Anspruch 14. Der Milchwagen wird zum Reinigen eines Nuckeleimers oder einer Nuckelflasche verwendet, wobei der Milchwagen ein Fahrgestell, einen Vorratsbehälter für ein flüssiges Nahrungsmittel und eine Fördereinrichtung, die einen mit einem Auslass des Vorratsbehälters verbundenen Eingang aufweist, wobei der Vorratsbehälter mit einer Reinigungsflüssigkeit gefüllt und der Nuckeleimer oder die Nuckelflasche innerhalb des Vorratsbehälters angeordnet und mithilfe eines von der Fördereinrichtung erzeugten Flüssigkeitsstrahls gereinigt wird.

Der verwendete Milchwagen kann insbesondere gemäß einem der Ansprüche 1 bis 13 ausgestaltet sein. Zu den Merkmalen und Vorteilen dieser Verwendung eines Milchwagens wird auf die vorstehenden Erläuterungen verwiesen. Bei der Reinigungsflüssigkeit kann es sich insbesondere um warmes oder heißes Wasser mit oder ohne Reinigungsmittelzusatz handeln. Der Flüssigkeitsstrahl kann mithilfe eines fest angeordneten Sprühkopfs erzeugt werden. Der Vorratsbehälter kann bevorzugt bis zu einem Füllstand kurz unterhalb des Endes der Rückführleitung befüllt werden.

Bei der Erfindung wird für die Reinigung eine mit einem Ausgang der Fördereinrichtung verbundene Rückführleitung verwendet, die einen feststehenden, nach oben weisen Endabschnitt mit mindestens einer Austrittsöffnung für die Reinigungsflüssigkeit aufweist. Zu den Merkmalen und Vorteilen dieser Lösung wird auf die vorstehenden Erläuterungen des Milchwagens verwiesen.

Die Erfindung wird nachfolgend anhand eines in zwei Figuren dargestellten Ausführungsbeispiels näher erläutert.
- Fig. 1: zeigt einen Milchwagen in einer schematischen Ansicht von der Seite.
- Fig. 2: zeigt den Milchwagen aus Figur 1 in einer ebenfalls schematischen Ansicht von vorn.

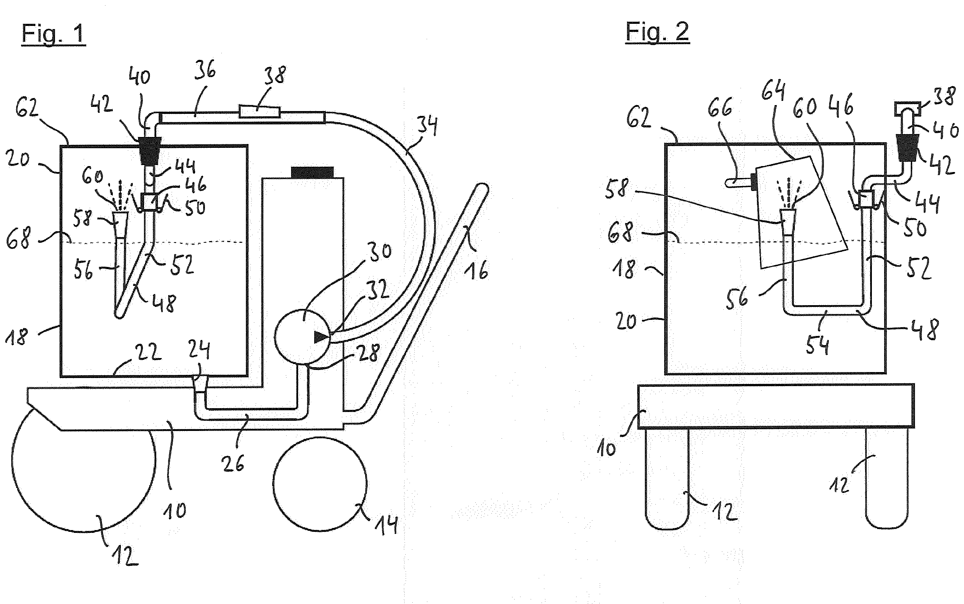

Die Milchwagen aus Figur 1 hat ein Fahrgestell 10 mit zwei Vorderrädern 12 und zwei lenkbaren Hinterrädern 14. Am Fahrgestell ist ein Griffbügel 16 angeordnet, mit dem der Milchwagen gezogen oder geschoben werden kann.

Auf dem Fahrgestell 10 ist ein Vorratsbehälter 18 für ein flüssiges Nahrungsmittel angeordnet. Der Vorratsbehälter 18 hat die Form eines aufrecht stehenden Kreiszylinders mit einer seitlichen Behälterwandung 20 und einem Behälterboden 22. Im Behälterboden 22 ist ein Auslass 24 angeordnet, der über eine Leitung 26 mit einem Eingang 28 einer Fördereinrichtung 30, bei der es sich um eine elektrisch angetriebene Pumpe handelt, verbunden ist. Am Auslass 24 ist ein nicht dargestellter Filter angeordnet.

An den Ausgang 32 der Fördereinrichtung 30 ist eine Abgabeeinrichtung angeschlossen, die einen Schlauch 34 und einen Dosierarm 36 mit einem Handgriff 38 und einem vorderen Ende 40 aufweist. Diese Abgabeeinrichtung bildet einen außerhalb des Vorratsbehälters 18 angeordneten Abschnitt einer Rückführleitung.

Das vordere Ende 40 des Dosierarms 36 ist in eine Aufnahme 42 eingesetzt. Die Aufnahme 42 bildet einen außen liegenden Anschluss eines mittleren Abschnitts 44 der Rückführleitung, die durch die Behälterwandung 20 hindurchgeführt ist. Dies ist besser in Figur 2 erkennbar.

An dem innerhalb des Vorratsbehälters 18 angeordneten Ende des mittleren Abschnitts 44 der Rückführleitung ist eine Kupplung 46 angeordnet, mit deren Hilfe ein innerhalb des Vorratsbehälters 18 angeordneter, U-förmiger Abschnitt 48 der Rückführleitung mit dem mittleren Abschnitt 44 verbunden und daran befestigt ist. Die Kupplung 46 weist zwei kleine Verschlusshebel 50 auf, mit denen diese Verbindung werkzeuglos hergestellt und wieder gelöst werden kann.

In der Zusammenschau der Figuren 1 und 2 erkennt man, dass der U-förmige Abschnitt 48 der Rückführleitung einen ersten, im Wesentlichen nach unten führenden Schenkel 52 aufweist, der an der Kupplung 46 beginnt und sich von dort bis zu einer im Wesentlichen waagerecht angeordneten Basis 54 des U-förmigen Abschnitts erstreckt. Der erste Schenkel 52 verläuft nahe der Behälterwandung 20. Ein zweiter Schenkel 56 des U-förmigen Abschnitts 48 ist etwas kürzer als der erste Schenkel 52. Er bildet einen Endabschnitt der Rückführleitung, der im Wesentlichen vertikal angeordnet ist und von unten nach oben verläuft, wo er an seinem oberen Ende mit einem Sprühkopf 58 endet, der mehrere Austrittsöffnungen 60 aufweist. Der zweite Schenkel 56 ist etwas kürzer als der erste Schenkel 52 des U-förmigen Abschnitts 48, sodass der Sprühkopf 58 etwas unterhalb der Kupplung 46 angeordnet ist. Er befindet sich in auf einer Höhe von etwa 20 cm unterhalb eines oberen Rands 62 des Vorratsbehälters 18.

Der Milchwagen weist außerdem eine nicht dargestellte Steuerung auf, mit der insbesondere die Fördereinrichtung 30 angesteuert wird. Durch Betätigen eines nicht dargestellten Tasters am Griffbügel 16 oder an einer Bedieneinheit am Handgriff 38 des Dosierarms 36 kann die Fördereinrichtung 30 für einen vorgegebenen Zeitraum von im Beispiel etwa 45 Sekunden aktiviert werden.

Zur Reinigung beispielsweise eines Nuckeleimers 64, der einen Saugnuckel 66 aufweist (siehe Figur 2), wird der Vorratsbehälter 18 bis zu einem Füllstand 68 etwas unterhalb des Sprühkopfs 58 mit einer Reinigungsflüssigkeit gefüllt. Bei aktivierter Fördereinrichtung 30 treten aus den Austrittsöffnungen 60 am Sprühkopf 58 Flüssigkeitsstrahlen seitlich und nach oben aus, die zur gründlichen Reinigung eines über den Endabschnitt gestülpten Nuckeleimers 64 verwendet werden. Gleitzeit kann die Außenseite des Nuckeleimers 64 gereinigt werden, beispielsweise von Hand unter Zuhilfenahme einer Bürste.

### Liste der Bezugszeichen

- 10: Fahrgestell
- 12: Hinterrad
- 14: Vorderrad
- 16: Griffbügel
- 18: Vorratsbehälter
- 20: Behälterwandung
- 22: Behälterboden
- 24: Auslass
- 26: Leitung
- 28: Eingang
- 30: Fördereinrichtung
- 32: Ausgang
- 34: Schlauch
- 36: Dosierarm
- 38: Handgriff
- 40: vorderes Ende
- 42: Aufnahme
- 44: mittlerer Abschnitt
- 46: Kupplung
- 48: U-förmiger Abschnitt
- 50: Verschlusshebel
- 52: erster Schenkel
- 54: Basis
- 56: zweiter Schenkel/Endabschnitt
- 58: Sprühkopf
- 60: Austrittsöffnung
- 62: oberer Rand
- 64: Nuckeleimer
- 66: Saugnuckel
- 68: Füllstand

## Patentansprüche

1. Milchwagen mit einem Fahrgestell (10), einem Vorratsbehälter (18) für ein flüssiges Nahrungsmittel und einer Fördereinrichtung (30), die einen mit einem Auslass (24) des Vorratsbehälters (18) verbundenen Eingang (28) und einen Ausgang (32) aufweist, der mit einer in dem Vorratsbehälter (18) endenden Rückführleitung verbunden oder verbindbar ist, **dadurch gekennzeichnet, dass** die Rückführleitung einen innerhalb des Vorratsbehälters (18) von unten nach oben führenden Endabschnitt aufweist, der in einem seitlichen Abstand von einer Behälterwandung (20) angeordnet ist und an seinem oberen Ende mindestens eine Austrittsöffnung (60) aufweist.

2. Milchwagen nach Anspruch 1, **dadurch gekennzeichnet, dass** die mindestens eine Austrittsöffnung (60) in einer Höhe im Bereich von 0 cm bis 30 cm unterhalb eines oberen Rands (62) des Vorratsbehälters (18) angeordnet ist.

3. Milchwagen nach Anspruch 1 oder 2, **dadurch gekennzeichnet, dass** der seitliche Abstand des Endabschnitts von der Behälterwandung (20) zu allen Seiten mindestens 10 cm beträgt.

4. Milchwagen nach einem der Ansprüche 1 bis 3, **dadurch gekennzeichnet, dass** der Endabschnitt in einem seitlichen Abstand von einer Mittelhochachse des Vorratsbehälters (18) angeordnet ist.

5. Milchwagen nach einem der Ansprüche 1 bis 4, **dadurch gekennzeichnet, dass** der Endabschnitt eine Länge von mindestens 15 cm aufweist.

6. Milchwagen nach einem der Ansprüche 1 bis 5, **dadurch gekennzeichnet, dass** die Rückführleitung einen innerhalb des Vorratsbehälters (18) angeordneten, U-förmigen Abschnitt (48) aufweist, wobei ein Schenkel (56) des U-förmigen Abschnitts (48) den Endabschnitt bildet und der andere Schenkel (52) des U-förmigen Abschnitts nahe der Behälterwandung (20) angeordnet ist.

7. Milchwagen nach einem der Ansprüche 1 bis 6, **dadurch gekennzeichnet, dass** ein außerhalb des Vorratsbehälters (18) angeordneter Abschnitt der Rückführleitung von einer Abgabeeinrichtung gebildet ist, die mit dem Ausgang (32) der Fördereinrichtung (30) verbunden ist.

8. Milchwagen nach einem der Ansprüche 1 bis 7, **dadurch gekennzeichnet, dass** die Rückführleitung einen mittleren Abschnitt (44) aufweist, der durch die Behälterwandung (20) hindurchgeführt oder um einen oberen Rand (62) der Behälterwandung (20) herumgeführt ist.

9. Milchwagen nach Anspruch 7 und 8, **dadurch gekennzeichnet, dass** der mittlere Abschnitt (44) der Rückführleitung außerhalb des Vorratsbehälters (18) mit der Abgabeeinrichtung verbindbar ist.

10. Milchwagen nach Anspruch 8 oder 9, **dadurch gekennzeichnet, dass** ein innerhalb des Vorratsbehälters (18) angeordneter Abschnitt der Rückführleitung lösbar mit dem mittleren Abschnitt (44) der Rückführleitung verbindbar und/oder lösbar an dem mittleren Abschnitt (44) der Rückführleitung befestigbar ist.

11. Milchwagen nach einem der Ansprüche 1 bis 10, **dadurch gekennzeichnet, dass** am Auslass (24) des Vorratsbehälters (18) und/oder in einer Verbindungsleitung (26) zwischen dem Auslass (24) und dem Eingang (28) der Fördereinrichtung (30) ein Filter angeordnet ist.

12. Milchwagen nach einem der Ansprüche 1 bis 11, **dadurch gekennzeichnet, dass** der Milchwagen eine Steuerung aufweist, mit der die Fördereinrichtung (30) in einem Reinigungsbetrieb für einen vorgegebenen Zeitraum aktivierbar ist.

13. Milchwagen nach einem der Ansprüche 1 bis 12, **dadurch gekennzeichnet, dass** am oberen Ende des Endabschnitts ein Sprühkopf (58) angeordnet ist, der die mindestens eine Austrittsöffnung (60) aufweist, wobei der Sprühkopf (58) dazu ausgebildet ist, bei Förderung einer Flüssigkeit mit der Fördereinrichtung (30) mehrere seitlich und/oder nach oben gerichtete Flüssigkeitsstrahlen zu erzeugen.

14. Verwendung eines Milchwagens zum Reinigen eines Nuckeleimers (64) oder einer Nuckelflasche, wobei der Milchwagen ein Fahrgestell (10), einen Vorratsbehälter (18) für ein flüssiges Nahrungsmittel und eine Fördereinrichtung (30), die einen mit einem Auslass (24) des Vorratsbehälters (18) verbundenen Eingang (28) aufweist, wobei der Vorratsbehälter (18) mit einer Reinigungsflüssigkeit gefüllt und der Nuckeleimer (64) oder die Nuckelflasche innerhalb des Vorratsbehälters (18) angeordnet und mithilfe eines von der Fördereinrichtung (30) erzeugten Flüssigkeitsstrahls gereinigt wird, wobei für die Reinigung eine mit einem Ausgang (32) der Fördereinrichtung (30) verbundene Rückführleitung verwendet wird, die einen innerhalb des Vorratsbehälters (18) feststehenden, nach oben weisenden Endabschnitt mit mindestens einer Austrittsöffnung (60) für die Reinigungsflüssigkeit aufweist.

## Claims

1. Milk cart having a chassis (10), a storage tank (18) for a liquid foodstuff and a conveyor system (30) which has an inlet (28) connected to an outlet (24) of the storage tank (18) and an exit (32) which is connected or can be connected to a return line terminating in the storage tank (18), **characterized in that** the return line has an end section which leads from bottom to top inside the storage tank (18), is arranged at a lateral distance from a tank wall (20) and has at least one opening (60) at its upper end.

2. Milk cart according to claim 1, **characterized in that** the at least one opening (60) is arranged at a height in the range of 0 cm to 30 cm below an upper rim (62) of the storage tank (18).

3. Milk cart according to claim 1 or 2, **characterized in that** the lateral distance of the end section from the tank wall (20) is at least 10 cm to all sides.

4. Milk cart according to one of the claims 1 to 3, **characterized in that** the end section is arranged at a lateral distance from a central vertical axis of the storage tank (18).

5. Milk cart according to one of the claims 1 to 4, **characterized in that** the end section has a minimum length of 15 cm.

6. Milk cart according to one of the claims 1 to 5, **characterized in that** the return line comprises a U-shaped section (48) arranged inside the storage tank (18), wherein one bracket (56) of the U-shaped section (48) forms the end section and the other bracket (52) of the U-shaped section is located near the tank wall (20).

7. Milk cart according to one of the claims 1 to 6, **characterized in that** a portion of the return line arranged outside of the storage tank (18) is formed by a delivery device which is connected to the exit (32) of the conveyor system (30).

8. Milk cart according to one of the claims 1 to 7, **characterized in that** the return line comprises a middle section (44) which passes through the tank wall (20) or over an upper rim (62) of the tank wall (20).

9. Milk cart according to claim 7 and 8, **characterized in that** the middle section (44) of the return line is connectable to the delivery device outside of the storage tank (18).

10. Milk cart according to one of the claims 8 or 9, **characterized in that** a section of the return line which is arranged inside the storage tank (18) can be detachably connected to the middle section (44) of the return line and/or can be detachably fastened to the middle section (44) of the return line.

11. Milk cart according to one of the claims 1 to 10, **characterized in that** a filter is arranged at the outlet (24) of the storage tank (18) and/or in a connecting conduit (26) between the outlet (24) and the inlet (28) of the conveyor system (30).

12. Milk cart according to one of the claims 1 to 11, **characterized in that** the milk cart comprises a controller with which the conveyer system (30) can be activated in a cleaning mode for a predetermined period of time.

13. Milk cart according to one of the claims 1 to 12, **characterized in that** a spray nozzle (58) is arranged at the upper end of the end section, which comprises at least one opening (60), wherein the spray nozzle (58) is adapted to generate a plurality of laterally and/or upwardly directed liquid jets when conveying a liquid with the conveyor system (30)

14. Usage of a milk cart to clean a feeding bucket (64) or a feeding bottle, wherein the milk cart comprises a chassis (10), a storage tank (18) for a liquid foodstuff and a conveyor system (30) which has an inlet (28) connected to an outlet (24) of the storage tank (18), wherein the storage tank (18) is filled with a cleaning liquid and the feeding bucket (64) or feeding bottle is arranged inside the storage tank (18) and is cleaned by means of a liquid jet produced by the conveyor system (30), wherein for the cleaning a return line connected to an outlet (32) of the conveyor system (30) is used and has, within the storage tank (18), a fixed, upwardly pointing end section with at least one opening (60) for the cleaning liquid.

## Revendications

1. Charrette à lait dotée d'un châssis (10), un récipient de stockage (18) pour un produit alimentaire liquide et un dispositif de transport (30) présentant une entrée (28) reliée à une évacuation (24) du récipient de stockage (18) ainsi qu'une sortie (32) reliée ou apte à être reliée à une conduite de retour débouchant dans le récipient de stockage (18), **caractérisée en ce que** la conduite de retour présente une section d'extrémité menant du bas vers le haut à l'intérieur du récipient de stockage (18), laquelle est disposée à une distance latérale d'une paroi de récipient (20) et présente une ouverture de décharge (60).

2. Charrette à lait selon la revendication 1, **caractérisée en ce que** l'au moins une ouverture de décharge (60) est disposée à une hauteur comprise entre 0 cm et 30 cm sous un bord supérieur (62) du récipient de stockage (18).

3. Charrette à lait selon la revendication 1 ou 2, **caractérisée en ce que** la distance latérale de la section d'extrémité par rapport à la paroi de récipient (20) mesure au moins 10 cm sur chaque côté.

4. Charrette à lait selon l'une des revendications 1 à 3, **caractérisée en ce que** la section d'extrémité est disposée à une distance latérale d'un axe vertical médian du récipient de stockage (18).

5. Charrette à lait selon l'une des revendications 1 à 4, **caractérisée en ce que** la section d'extrémité présente une longueur d'au moins 15 cm.

6. Charrette à lait selon l'une des revendications 1 à 5, **caractérisée en ce que** la conduite de retour présente une section en forme de U (48) disposée à l'intérieur du récipient de stockage (18), dans laquelle une branche (56) de la section en forme de U (48) forme la section d'extrémité et l'autre branche (52) de la section en forme de U est disposée à proximité de la paroi de récipient (20).

7. Charrette à lait selon l'une des revendications 1 à 6, **caractérisée en ce qu'**une section de la conduite de retour disposée à l'extérieur du récipient de stockage (18) est formée par un dispositif de distribution relié à la sortie (32) du dispositif de transport (30).

8. Charrette à lait selon l'une des revendications 1 à 7, **caractérisée en ce que** la conduite de retour présente une section centrale (44) guidée à travers la paroi de récipient (20) ou guidée autour d'un bord supérieur (62) de la paroi de récipient (20).

9. Charrette à lait selon la revendication 7 ou 8, **caractérisée en ce que** la section centrale (44) de la conduite de retour peut être reliée au dispositif de distribution à l'extérieur du récipient de stockage (18).

10. Charrette à lait selon la revendication 8 ou 9, **caractérisée en ce qu'**une section de la conduite de retour disposée à l'intérieur du récipient de stockage (18) peut être reliée de façon détachable à la section centrale (44) de la conduite de retour et/ou fixée de façon détachable à la section centrale (44) de la conduite de retour.

11. Charrette à lait selon l'une des revendications 1 à 10, **caractérisée en ce qu'**un filtre est disposé au niveau de l'évacuation (24) du récipient de stockage (18) et/ou dans une conduite de liaison (26) entre l'évacuation (24) et l'entrée (28) du dispositif de transport (30).

12. Charrette à lait selon l'une des revendications 1 à 11, **caractérisée en ce que** la charrette à lait présente une commande permettant d'activer le dispositif de transport (30) dans un mode de nettoyage pour une durée prédéterminée.

13. Charrette à lait selon l'une des revendications 1 à 12, **caractérisée en ce qu'**une tête de pulvérisation (58) présentant l'au moins une ouverture de décharge (60) est disposée à l'extrémité supérieure de la section d'extrémité, dans laquelle la tête de pulvérisation (58) est conçue pour produire plusieurs jets de liquide orientés latéralement et/ou vers le haut pendant le transport d'un liquide à l'aide du dispositif de transport (30).

14. Utilisation d'une charrette à lait pour le nettoyage d'un pot à tétine (64) ou d'un biberon, dans laquelle la charrette à lait présente un châssis (10), un récipient de stockage (18) pour un produit alimentaire liquide et un dispositif de transport (30) présentant une entrée (28) reliée à une évacuation (24) du récipient de stockage (18), dans laquelle le récipient de stockage (18) est rempli avec un liquide de nettoyage et le pot à tétine (64) ou le biberon est disposé à l'intérieur du récipient de stockage (18) et nettoyé à l'aide d'un jet de liquide produit par le dispositif de transport (30), dans laquelle une conduite de retour reliée à une sortie (32) du dispositif de transport (30) et présentant une section d'extrémité immobile située à l'intérieur du récipient de stockage (18) et dirigée vers le haut avec au moins une ouverture de décharge (60) pour le liquide de nettoyage est utilisée pour le nettoyage.
